# EUROPEAN PATENT APPLICATION

(11) **EP 4 062 758 A1**
(43) Date of publication of application: **28.09.2022**
(21) Application number: 21164442.2
(22) Date of filing: 24.03.2021
(51) Int. Cl.: A01M 1/02, A01M 1/06

(54) **INSECT TRAP**

(71) Applicant: Premal B.V., 6708 WH Wageningen (NL)
(72) Inventor: FAIRBAIRN, Henry James Robert, 3028 AN Rotterdam (NL)
(74) Representative: Nederlandsch Octrooibureau

(57) **Abstract**

An insect trap (1) for trapping flying insects, such as mosquitoes (F), comprising a base container (2) for storing an insect attractant (3a) and a moisture retaining material (3b), and a container canopy (4) configured for covering an open end (5) of the base container (2). The container canopy (4) comprises an air duct part (6) and a canopy surface part (7) encircling the air duct part (6). The air duct part (6) comprises an intake end (9), an exhaust end (10), and a suction member (11) configured for drawing air into the intake end (9) and expelling the air through the exhaust end (10) into the base container (2) when the container canopy (4) is connected thereto. The canopy surface part (7) comprises an air permeable screening mesh (12) comprising a pattern (13) of spaced apart mesh strands (14) and mesh apertures (15).

## Description

### Field of the invention

The present invention relates to an insect trap, in particular an insect trap for luring and trapping various types of flying insects, such as mosquitoes.

### Background art

International application WO 2019/042839 A1 discloses an insect trap which can serve in particular to attract and/or trap flying insects and/or pest insects. The insect trap comprises a suction opening which continues into a suction duct and leads to an interior space of the insect trap. An air flow prevails through the suction duct, which air flow applies a negative pressure or a suction current to the suction opening. The insect trap has a surface, which surface surrounds the suction duct near the suction opening and which surface envelops the suction duct in a further region at a changing radial distance and widens in a direction parallel to the direction of the air flow passing through the suction duct. The surface is at least partially permeable to outflowing air and forms at least part of an outer wall of the insect trap. The insect trap is equipped with a front side or bottom side, which front side or bottom side is adjoined to the outer wall, which front side or bottom side is largely impermeable to incoming or outflowing air and which front side or bottom side is located opposite the suction opening.

### Summary of the invention

The present invention seeks to provide an improved insect trap, in particular an insect trap for effectively luring and trapping various types of flying insects, such as mosquitoes. The insect trap allows for highly optimised homogenous dispersion of insect attractant with minimal turbulence to achieve greatly improved capture performance.

According to the present invention, an insect trap as defined above is provided, comprising a base container arranged for storing an insect attractant and a moisture retaining material, and a container canopy configured for covering an open end of the base container. The container canopy comprises an air duct part and a canopy surface part encircling the air duct part, wherein the canopy surface part comprises an outer circumferential edge configured for connection to the base container.

The air duct part comprises an intake end, an exhaust end, and a suction member configured for drawing air into the intake end and expelling the air through the exhaust end into the base container when the container canopy is connected thereto.

The canopy surface part comprises an air permeable screening mesh and wherein the screening mesh comprises a pattern of spaced apart mesh strands and mesh apertures arranged there between, wherein each mesh strand has a strand thickness and wherein each mesh aperture has an aperture area, and wherein a blocking ratio defined as the thread thickness over the aperture area lies between 0.2 and 5.

According to the invention, the blocking ratio between 0.2 and 5 allows for optimized air permeability of the screening mesh to expel odorised air or vapour from the insect trap, mimicking human presence in optimized manner for attracting insects, such as mosquitoes, to the intake end of the air duct part.

### Short description of drawings

The present invention will be discussed in more detail below, with reference to the attached drawings, in which
Figure 1 shows a three dimensional view of an insect trap according to an embodiment of the present invention;
Figure 2 shows a cross section of an insect trap according to an embodiment of the present invention;
Figure 3 shows a three dimensional view of a container canopy according to an embodiment of the present invention; and wherein
Figure 4 shows a graph view of capture performance of the insect trap as a function of air blockage of mesh types according to a group of embodiments of the present invention.

### Detailed description of embodiments

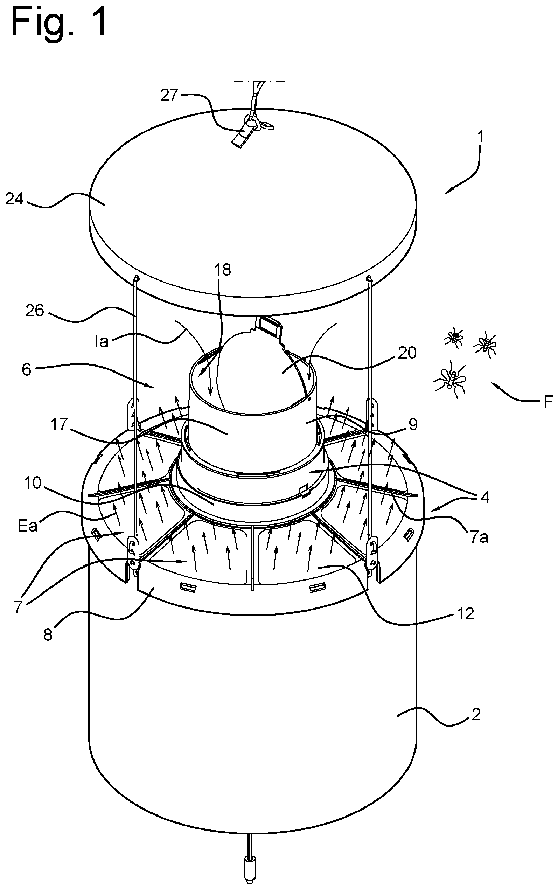

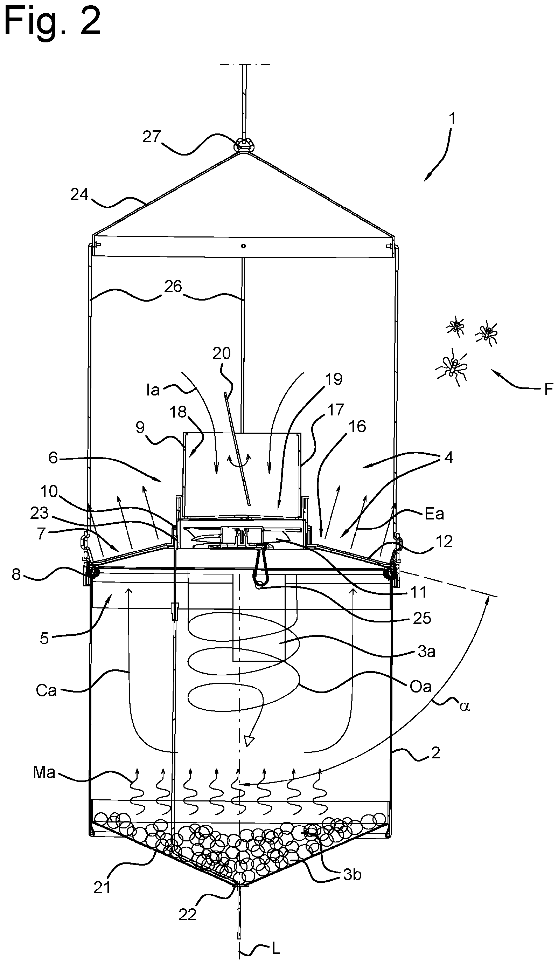

Figure 1 and 2 show a three dimensional view and cross section, respectively, of an insect trap 1 according to embodiment of the present invention. As depicted, the insect trap 1 is configured for capturing flying insects "F", such as mosquitoes F. The insect trap 1 comprises a base container 2 which is arranged for storing an insect attractant 3a and a moisture retaining material 3b. The insect trap further comprises a container canopy 4 configured for covering an open end 5 of the base container 2. For simplicity, the container canopy 4 may be seen as a container lid or cap configured for covering the open end 5 of the base container 2. In an advantageous embodiment, the container canopy 4 is removable from the base container 2 to allow the insect attractant 3a and moist retaining material 3b to be placed in the base container 2 and/or removed therefrom.

The container canopy 4 comprises an air duct part 6 and a canopy surface part 7 that encircling or extends around the air duct part 6, wherein the canopy surface part 7 comprises an outer circumferential edge 8 which is configured for connection to the base container 2.

As depicted, the air duct part 6 comprises an intake end 9, an exhaust end 10, and a suction member 11 configured for drawing air, e.g. intake air "la", into the intake end 9 and to expel the air through the exhaust end 10 into the base container 2 when the container canopy 4 is placed thereon and connected thereto. The intake end 9 is configured to allow insects, such as mosquitoes F for example, to be drawn into the insect trap 1 by the suction member 11. In an exemplary embodiment, the suction member 11 is arranged in the air duct part 6, such as an electrically operated fan-based suction member 11 arranged in the air duct part 6 for forcing air there through from the intake end 9 to the exhaust end 10.

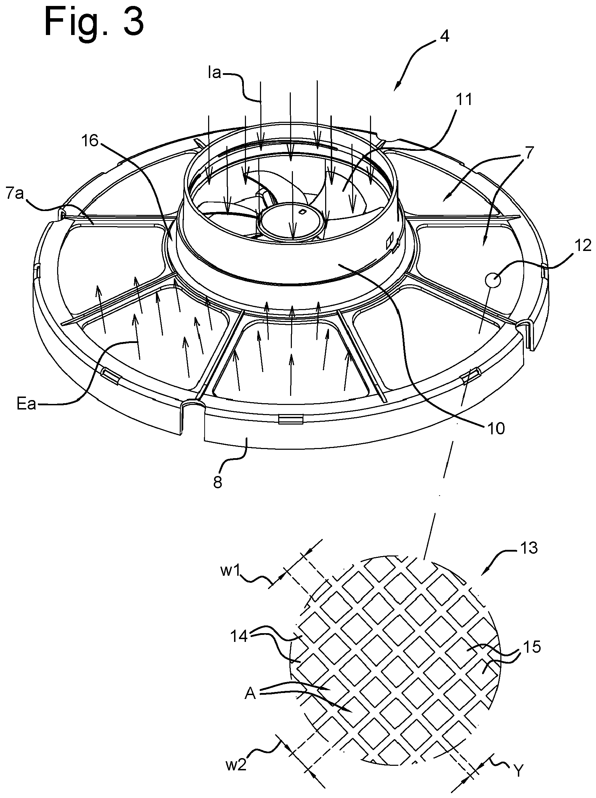

Figure 3 shows a more detailed three dimensional view of the container canopy 4 according to an embodiment of the present invention. As seen, the canopy surface part 7 of the present invention comprises an air permeable screening mesh 12 and wherein the screening mesh 12 comprises a pattern 13 of spaced apart mesh strands 14 and mesh apertures 15 arranged there between. In exemplary embodiments as depicted, the screening mesh 12 may be arranged and extend substantially parallel to and/or along the canopy surface part 7.

Further, each mesh strand 14 has a strand thickness Y (mm) and wherein each mesh aperture 15 has an aperture area A (mm²), wherein a blocking ratio is defined as the thread thickness Y over the aperture area A, i.e. Y/A. The blocking ratio Y/A then lies between 0.2 and 5.

According to the present invention, the screen mesh 12 exhibits or defines a blocking ratio Y/A that lies between 0.2 and 5. This range for the blocking ratio Y/A allows the insect trap 1 to authentically mimic human presence when expelled air "Ea" carrying e.g. odorised air/or vapour from the insect attractant 3a through the screening mesh 12. Details on how the odorised air and/or vapour may be generated will be discussed in further detail later.

The blocking ratio Y/A as stated allows for optimized air permeability of the screening mesh 12 to expel odorised air and/or vapour from the insect trap 1, for example, thereby mimicking human presence for attracting insects to the intake end 9 of the air duct part 6. Most notably, a blocking ratio Y/A that is too high negatively influences the attraction and capture performance of the insect trap 1 by excessively restricting the expulsion of odorised air/vapour as expelled air Ea. Such restriction would not expel sufficient odorised air and/or vapour to attract insects. Conversely, a blocking ratio Y/A that is too low also negatively influences the attraction and capture performance as odorised air and/or vapour would be expelled at too high velocities disturbing the approach of mosquitos F.

As mentioned above, the base container 2 is arranged for storing an insect attractant 3a and a moisture retaining material 3b. As depicted, when the insect trap 1 is in operation, the suction member 11 allows air to be forced along the insect attractant 3a and as a result of which odorised air "Oa" is obtained, which flows downward into the base container 2. The moisture retaining material 3b in the base container 2 allows moisturised air "Ma" to be created through evaporation of the moisture held by the moisture retaining material 3b. The odorised air Oa and the moisturised air Ma are then mixed and form combined air "Ca" flowing toward the container canopy 4 to be expelled through the screening mesh 12.

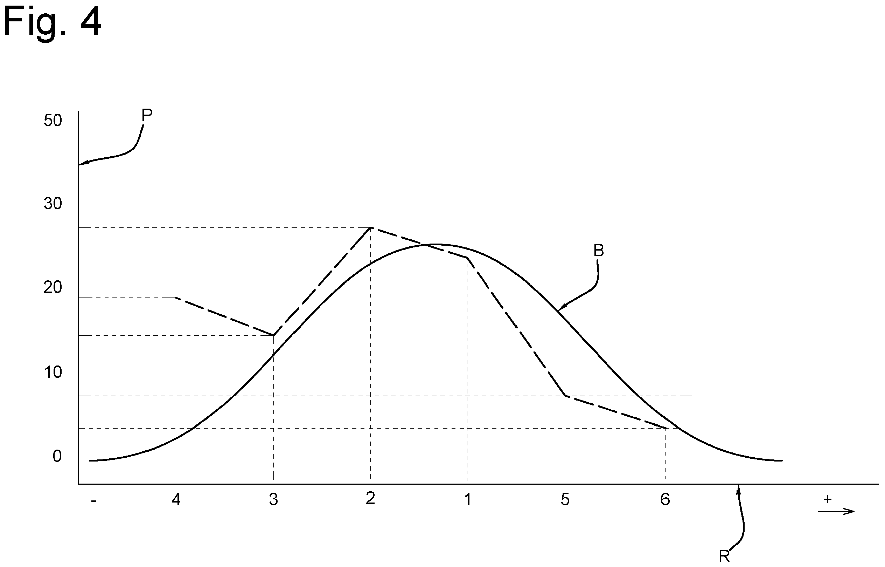

According to the present invention, the screening mesh 12 allows for a much improved attraction and capture performance of the insect trap 1 by providing a blocking ratio Y/A as mentioned above. To explain the blocking ratio Y/A in more detail on how the performance of the insect trap 1 depends thereon, Figure 4 shows a graph view of capture performance of the insect trap 1 as a function of what can be referred to as "air blockage" or "air restriction", R, of the screening mesh 12.

In particular, Figure 4 is based on the following Table 1 and Table 2 below:

**Table 1**

| | | | | | | |
|---|---|---|---|---|---|---|
| Mesh type | 1 | 2 | 3 | 4 | 5 | 6 |
| Y (mm) | 0.23 | 0.23 | 0.21 | 0.28 | 0.5 | 0.17 |
| w1 (mm) | 0.39 | 0.27 | 0.8 | 0.95 | 0.03 | 0.15 |
| w2 (mm) | 0.88 | 0.88 | 0.8 | 1.35 | 0.99 | 0.31 |
| A (mm2) | 0.3432 | 0.2376 | 0.64 | 1.2825 | 0.0297 | 0.0465 |
| Y:A | 2 : 3 | 1 : 1 | 1 : 3 | 2 : 9 | 5 : 3 | 5 : 1 |
| Air Blockage (R) | - | + | -- | --- | ++ | +++ |

**Table 2**

| | | | | | | |
|---|---|---|---|---|---|---|
| Mesh type | 1 | 2 | 3 | 4 | 5 | 6 |
| % of Total Captures | 24.22 | 27.33 | 16.77 | 19.88 | 7.45 | 4.35 |

The first row of Table 1 defines six exemplary mesh types 1 to 6 based on experimental values for strand thickness Y (mm) in the 2^{nd} row, a first space width w1 (mm) between mesh strands 14 in the 3^{rd} row, a second space width w2 (mm) between mesh strands 14 in the 4^{th} row, the aperture area (mm²) in the 5^{th} row, the blocking ratio Y/A in the 6^{th} row, and a defined "air blockage", R, in the 7^{th} row.

Note that for simplicity and explanatory purposes the aperture area A is defined as w1*w2 and where the screening mesh 12 comprises a pattern 13 of substantially square or rectangular mesh apertures 15 as an exemplary embodiment of the pattern 13. For the blocking ratio Y/A it is not required to have square or rectangular mesh apertures 15, however.

Here, the "air blockage" R is seen as a qualitative measure of resistance to air flow, such as resistance to odorised air/vapour flow through the screening mesh 12. The air blockage R corresponds to the blocking ratio Y/A and is arranged along the horizontal axis in Figure 4 to allow for easy differentiation of mesh types 1 to 6 on the basis of their blocking ratio. As depicted, the least blockage "---" to the highest blockage "+++" goes from left to right.

The vertical axis depicted in Figure 4 follows from experiments carried out with insect trap 1 for different mesh types 1 to 6 as tabulated in Table 1. In particular, the capture performances "P" of six (6) insect traps 1 each fitted with a different mesh type were observed over the course of six (6) nights. Each insect trap 1 was located at a different position of a garden in Nairobi, Kenya. Each day insect trap positions were rotated and each day, the number of mosquitoes F captured in each insect trap 1 were collected and counted. The percentage (%) of the total number of captures in each trap is shown in Table 2 as a function of the mesh type used. The capture performance "P", i.e. % of the total number of captures, is shown on the vertical axis of Figure 4.

From Figure 4 it follows that an optimum exists for the capture performance P as a function of the air blockage R, i.e. the blocking ratio Y/A of mesh types. As shown, mesh type 1 and 2 appear to have the best capture performance P, i.e. 24.22% and 27.33% respectively. Mesh types 3, 4 with less air blockage and mesh types 5, 6 with higher air blockage exhibit a lower capture performance.

The test results shown in Figure 4 are compared to an hypothetical bell curve B. As hypothesised, even with the relatively limited dataset shown in Table 1, mesh types with a blocking ratio Y/A near 1:1 or 2:3 seem to perform the best. Reducing the air blockage (mesh types 3, 4) results in a decrease in capture performance P, as does an increase in air blockage (mesh types 5, 6). This suggests that there is a range for the blocking ratio Y/A in which capture performance is optimized.

It is worth mentioning that mesh types 3, 4 and 5, 6 need not be avoided or should be labelled as performing poorly. On the contrary, Figure 4 shows that the blocking ratio Y/A influences the capture performance P but that the range for the blocking ratio Y/A between 0.2 and 5 provides for improved and very acceptable capture performance over the entire range. However, a more specific blocking ratio Y/A within this range may or may not provide better capture performance compared to other blocking ratios Y/A in this range.

As exemplified in Figure 4, Table 1 and 2, in an exemplary advantageous embodiment the strand thickness Y may be chosen between 0.1 mm and 0.6 mm, through which allowable aperture areas A follow based on the blocking ratio Y/A in the range 0.2 to 5.

In another advantageous embodiment, the aperture area A lies between 0.02 mm² and 1.4 mm², through which allowable strand thicknesses Y follow based on the blocking ratio Y/A in the range 0.2 to 5.

These embodiments for the strand thicknesses Y and aperture areas A shows that the blocking ratio Y/A allows for considerable design flexibility for the screening mesh 12 and in particular the pattern 13 thereof, which need not be square or rectangular as depicted in Figure 3.

From Figures 1 to 3 it can be seen that in an embodiment the canopy surface part 7 has a truncated conical shape and wherein the air duct part 6 is connected to the canopy surface part 7 at an apex or top portion 16 thereof. As depicted, in this embodiment the conical canopy surface part 7 encircles or surrounds the air duct part 6, where the canopy surface part 7 and the air duct part 6 are concentrically arranged on a longitudinal axis L of the air duct part 6 as shown in Figure 2. In this embodiment the insect trap 1 is able to provide odorised air/vapour as expelled air Ea around the air duct part 6 to attract mosquitos F from all directions for example. This is advantageously achieved when the screening mesh 12 is arranged and extends substantially parallel to and/or along the canopy surface part 7 encircling the air duct part 6.

Note that the conical shaped canopy surface part 7 further minimizes the amount of expelled air Ea being drawn back into the intake end 9 of the air duct part 6. This is clearly shown in Figure 2, where the conical shaped canopy surface part 7 is arranged at an acute angle α with respect to the longitudinal axis L of the air duct part 6. This minimizes recirculation of expelled air Ea, which would reduce the ability of the insect trap 1 to mimic human presence to some extent.

In a specific embodiment, the canopy surface part 7 is arranged at an acute angle α between the 45° degrees and 89° degrees with respect to the longitudinal axis L of the air duct part 6, e.g. between 60° degrees and 80°. Such acute angles α prevent odorized air/vapour being drawn back into the insect trap 1 yet still allow good attraction of insects F close to the intake end 9 of the air duct part 6.

Another point to note is that the base container 2 and container canopy 4 need not be circular as shown in Figure 1, e.g. have circular circumferences. It is conceivable that the base container 2 and container canopy 4 are square or rectangular, i.e. have square or rectangular perimeters. This also applies to the canopy surface part 7, which need not be a circular truncated cone but where the canopy surface part 7 may also be a square or rectangular truncated cone, e.g. such as a truncated pyramid. Even the air duct part 6 need not be a circular duct part but could also be a square or rectangular duct part. Even with these square/rectangular shapes the canopy surface part 7 encircles or surrounds the air duct part 6, possibly concentrically with respect to the longitudinal axis L.

To facilitate that air in the base container 2 is urged toward the container canopy 4 for expulsion through the screening mesh 12, an embodiment is provided wherein the base container 2 is substantially impermeable to air. This prevents air drawn into the base container 2 to escape through the base container 2 rather than through the container canopy 4.

As further depicted in Figure 2, the exhaust end 10 of the air duct part 6 is connected to the canopy surface part 7, e.g. at the apex/top portion 16 thereof. In this embodiment the exhaust end 10 of the air duct part 6 connects to the canopy surface part 7 and where the air duct part 6 projects away from the canopy surface part 7 in upward manner. In this way the intake end 9 is positioned away from the canopy surface part 7, in particular the screening mesh 12, to prevent recirculation of expelled air Ea back into the intake end 9.

Referring to Figure 1 and 2, in an advantageous embodiment the air duct part 6 may comprise a removable catch pot 17 having an intake end 18 and an exhaust end 19, wherein the exhaust end 19 of the catch pot 17 is provided with a further screening mesh. This embodiment keeps the base container 2 clean and avoids trapping insects, e.g. mosquitos F, in the base container 2 itself, which would make cleaning the insect trap 1 more cumbersome. Instead, the catch pot 17 is provided with a further screening mesh at the exhaust end 19 thereof so that insects are drawn into the catch pot 17 through its intake end 18 but are blocked by the further screening mesh. It should be noted that the intake end 18 of the catch pot 17 may coincide with the intake end 9 of the air duct part 6, thereby clarifying that air is drawn into the catch pot 17 through the intake end 9 when the suction member 11 is in operation.

Note that the further screening mesh of the catch pot 17 allows the screening mesh 12 of the canopy surface part 7 to be designed with a desired blocking ratio Y/A in mind rather than merely catching insects, such as mosquitoes F. That is, the further screening mesh of the catch pot 17 can be specifically configured to stop/filter insects whereas the screening mesh 12 of the canopy surface part 7 may be specifically configured to achieve a desired blocking ratio Y/A that need not be optimal for blocking particular types of insects for example. In this way the insect trap 1 can be fully optimised as to the authenticity of mimicking human presence and capturing particular types of insects by means of the catch pot 17.

As depicted in Figure 2, another advantageous embodiment may be provided wherein the intake end 18 of the catch pot 17 comprises a rotatable lid 20. The rotatable lid 20 may be configured to open when the suction member 11 is in operation, allowing insects such as mosquitos F to be drawn into the catch pot 17 but cannot escape it once the suction member 11 is disengaged.

In a further advantageous embodiment, the suction member 11 may be arranged at the exhaust end 10 of the air duct part 6 and wherein the exhaust end 19 of the catch pot 17 is configured for removable attachment to the suction member 11. This embodiment allows the catch pot 17 to be conveniently placed on top of the suction member 11 as depicted in Figure 2, wherein Figure 3 depicts an embodiment wherein the catch pot 17 has been removed from the suction member 11 at the exhaust end 10.

As stated earlier, the base container 2 is arranged for storing an insect attractant 3a and a moisture retaining material 3b. Figure 2 shows an exemplary embodiment wherein the base container 2 comprises a concave bottom part 21 for holding the moisture retaining material 3b, and wherein the bottom part 21 comprises a bottom opening 22 at a lowest point of the bottom part 21. In this embodiment the concave bottom part 21 ensures that the moisture retaining material 3b tends to converge to the lowest point of the concave bottom part 21 due to gravity. The bottom opening 22 is provided to ensure that any fluids (e.g. water) in the base container 2 can be drained therefrom. In an advantageous embodiment the bottom opening 22 can be made sufficiently small to allow for drainage but to prevent the moisture retaining material 3b to fall through the bottom opening 22. In this way the moisture retaining material 3b is able to cover the bottom opening 22 to allow for drainage but also to allow the base container 2 to be sufficiently impermeable to air, so that any air in the base container 2 is still expelled through the canopy surface part 7 rather than through bottom part 21.

In an advantageous embodiment the moisture retaining material 3b comprises one or more hydro beads or pebbles, which are able to converge, e.g. roll or slide, to the lowest point of the bottom part 21 and to cover a sufficiently small bottom opening 22 without falling through. This will ensure that fluid drainage is possible yet the base container 2 remains sufficiently impermeable to air as the hydro beads cover the bottom opening 22. The hydro beads are configured to retain moist that slowly evaporates thus creating the moisturized air Ma as mentioned above. In a specific example, the hydro beads may be of a porous material, such as particular types of clay, to facilitate moist retention.

In further embodiments the moisture retaining material 3b may comprise a foam-like material, which may be lightweight and exhibit high moisture retention. The foam may be provided in non-granulated form if desired, such as a foam block for placement in the base container 2.

It is worth mentioning that the bottom opening 22 may also be utilized to run a power cord there through for powering any electrical components the insect trap 1 may have, such as an electrically operated suction member 11, or as we shall see later, a heating element.

As for the insect attractant 3a, an embodiment is provided wherein the insect attractant 3a comprises an odour sachet for placement in the base container 2, so that air being supplied through the exhaust end 10 of the air duct part 6 is odorized to form the odorized air Oa. In an advantage embodiment, the base container 2 or container canopy 4 comprises a mounting point 25 for holding the odour sachet. In this embodiment the odour sachet need not be placed on the bottom of the base container 2, e.g. on the concave bottom part 21 or on the moisture retaining material 3b. Instead, the mounting point 25 may be positioned and configured for hanging the odour sachet above the moisture retaining material 3b and close to the exhaust end 10. In an exemplary embodiment, the mounting point 25 is arranged along the open end 5 of the base container 2, e.g. along a rim portion of the open end 5, so that the odour sachet is close to the exhaust end 10 of the air duct part 6 when the container canopy 4 is attached to the base container 2.

To further facilitate the attraction of insects such as mosquitos F, an embodiment is considered wherein the insect trap 1 comprises a heating element 23 arranged on the air duct part 6. In this embodiment the insect trap 1 is able to mimic heat being radiated by human presence for luring, for example, mosquitoes F to the intake end 9 of the air duct part 6. The heating element 23 entices the approach flight of the mosquitoes F closer to the intake end 9 so that they are drawn into the air duct part 6 when the insect trap 1, i.e. the suction member 11, is in operation.

In exemplary embodiments the heating element 23 may be arranged at the intake end 9 or at the exhaust end 10 of the air duct part 6, or the intake or exhaust end 18, 19 of the catch pot 17. In even further embodiments the heating element 23 may be arranged around the air duct part 6, e.g. along its circumference/perimeter, so that air moving through the air duct part 6 is not obstructed by the heating element 23.

Since the insect trap 1 may be placed outside and at any desired location, the insect trap 1 must be able to deal with rain, falling leaves and other debris. To that end, an embodiment is provided wherein the insect trap 1 further comprises a trap cover 24 for suspension above the container canopy 4, i.e. above and spaced therefrom, wherein the trap cover 24 is configured for connection to the base container 2 or the container canopy 4 by one or more support members 26, such as wires, lines, rods and the like. In this embodiment the trap cover 24 may be seen as an umbrella that can be suspended above and sufficiently spaced apart from the intake end 9 of the air duct part 6 when the insect trap 1 is assembled. In an advantageous embodiment, the trap cover 24 may utilize a hook point 27 to hang the insect trap 1 where needed.

The present invention has been described above with reference to a number of exemplary embodiments as shown in the drawings. Modifications and alternative implementations of some parts or elements are possible, and are included in the scope of protection as defined in the appended claims.

## Claims

1. An insect trap (1) for trapping flying insects, such as mosquitoes (F), comprising a base container (2) arranged for storing an insect attractant (3a) and a moisture retaining material (3b), and a container canopy (4) configured for covering an open end (5) of the base container (2);
wherein the container canopy (4) comprises an air duct part (6) and a canopy surface part (7) encircling the air duct part (6), wherein the canopy surface part (7) comprises an outer circumferential edge (8) configured for connection to the base container (2);
wherein the air duct part (6) comprises an intake end (9), an exhaust end (10), and a suction member (11) configured for drawing air into the intake end (9) and expelling the air through the exhaust end (10) into the base container (2) when the container canopy (4) is connected thereto;
wherein the canopy surface part (7) comprises an air permeable screening mesh (12) and wherein the screening mesh (12) comprises a pattern (13) of spaced apart mesh strands (14) and mesh apertures (15) arranged there between, wherein each mesh strand (14) has a strand thickness (Y) and wherein each mesh aperture (15) has an aperture area (A); and
wherein a blocking ratio defined as the thread thickness (Y) over the aperture area (A) lies between 0.2 and 5.

2. The insect trap according to claim 1, wherein the strand thickness (Y) lies between 0.1 mm and 0.6 mm.

3. The insect trap according to claim 1, wherein the aperture area (A) lies between 0.02 mm² and 1.4 mm².

4. The insect trap according to any one of claims 1-3 , wherein the canopy surface part (7) has a truncated conical shape and wherein the air duct part (6) is connected to the canopy surface part (7) at an apex portion (16) thereof.

5. The insect trap according to claim 4, wherein the canopy surface part (7) is arranged at an acute angle (α) between the 45° degrees and 89° degrees with respect to a longitudinal axis (L) of the air duct part (6).

6. The insect trap according to any one of claims 1-5, wherein the base container (2) is substantially impermeable to air.

7. The insect trap according to any one of claims 1-6, wherein the exhaust end (10) of the air duct part (6) is connected to the canopy surface part (7).

8. The insect trap according to any of claims 1-7, wherein the air duct part (6) comprises a removable catch pot (17) having an intake end (18) and an exhaust end (19), wherein the exhaust end (19) of the catch pot (17) is provided with a further screening mesh.

9. The insect trap according to claim 8, wherein the intake end (18) of the catch pot (17) comprises a rotatable lid (20).

10. The insect trap according to claim 8 or 9, wherein the suction member (11) is arranged at the exhaust end (10) of the air duct part (6) and wherein the exhaust end (19) of the catch pot (17) is configured for removable attachment to the suction member (11).

11. The insect trap according to any one of claims 1-10, wherein the base container (2) comprises a concave bottom part (21) for holding the moisture retaining material (3b), wherein the bottom part (21) comprises a bottom opening (22) at a lowest point of the bottom part (21).

12. The insect trap according to any one of claims 1-11, further comprising a heating element (23) arranged on the air duct part (6) for further attracting insects during operation.

13. The insect trap according to any one of claims 1-12, further comprising a trap cover (24) for suspension above the container canopy (4), wherein the trap cover (24) is configured for connection to the base container (2) or the container canopy (4) by one or more support members (26).

14. The insect trap according to any one of claims 1-13, wherein the insect attractant (3a) comprises an odour sachet (3a), and wherein the base container (2) or container canopy (4) comprises a mounting point (25) for holding the odour sachet (3a).

15. The insect trap according to any one of claims 1-14, wherein the moisture retaining material (3b) comprises one or more hydro beads.
